# NEW EUROPEAN PATENT SPECIFICATION

(11) **EP 0 266 939 B2**
(45) Date of publication and mention of the opposition decision: **02.05.2001**
(45) Mention of the grant of the patent: 06.04.1994
(21) Application number: 87309291.0
(22) Date of filing: 21.10.1987
(51) Int. Cl.: C09D 17/00, C09C 1/36, D21H 19/38, C09D 7/12, C08K 3/22

(54) **Improvement of the photostability of titanium dioxide pigments**
Verbesserung der Lichtbestandigkeit von Titandioxid Pigmenten.
Amèlioration de la photostabilité des pigments de dioxyde de titane.

(30) Priority: 31.10.1986 US 926353; 20.01.1987 US 5229
(43) Date of publication of application: 11.05.1988
(73) Proprietor: AT&T Corp., New York, NY 10013-2412 (US)
(72) Inventor: Degani, Yinon, Highland Park New Jersey 08904 (US); Heller, Adam, Bridgewater New Jersey 08807 (US)
(74) Representative: Watts, Christopher Malcolm Kelway, Dr.

(56) References cited:
- EP-A- 0 026 948
- FR-A- 2 440 976
- GB-A- 1 017 475
- GB-A- 1 162 786
- US-A- 2 272 331
- US-A- 2 439 895
- ABSTRACT BULLETIN OF THE INSTITUTE OF PAPER CHEMISTRY, vol. 55, no. 6, December 1984, page 731, abstract no. 6946, Appleton, Wisconsin, US; & JP-A-84 01 544
- T.C. PATTON "Paint Flow And Pigment Dispersion", 2nd edition, J. Wiley & Sons, New York, 1979, pp. 412, 417, 421, 425, 436

## Description

Titanium dioxide is a pigment that is extensively utilized in a variety of applications. Generally the pigment is combined with a binder such as a latex, acrylic, vinyl acetate, alkyd, polyester, polystyrene, poly(methylmethacrylate) (PMMA), polyvinylchloride (PVC), melamine, cellulose and/or cellulose derivative in an emulsion or dispersion that is employed to produce a final product e.g., a painted board, colored plastic, or paper. For example, titanium dioxide is utilized as the pigment in white paint, in interior and exterior house paint, automotive paints and coatings. Titanium dioxide was first commercially produced by extracting titanium ore, such as Ilmenite (FeTiO₃), with concentrated sulfuric acid to form a liquid sulfate solution, concentrating this solution, by evaporating water, separating the FeSO₄ precipitate, hydrolyzing the solution to precipitate hydrated titanium dioxide, and baking at 800 to 1000°C to form a cake. The resulting cake of agglomerated material is then mechanically treated to disaggregate agglomerates to smaller particles that are suitable for use. Although the titanium dioxide obtained by this procedure was employed for a substantial time, it had significant associated problems. These problems were generally correlated with relative broad particle size distribution and with the presence of impurities, particularly iron, that remained in the titanium dioxide during production. Generally, these impurities were homogenously distributed in the titanium dioxide particles. Strong efforts were made to reduce the iron content and commercial limits of no more than 200 ppm by weight were established. (See. H. Rechmann, Berichte Der Bunsengesellschaft für Physikalische Chemie 71 277-285 (1967)

The impurities cause because of their strong light absorbtion in front of the visible spectrum a significant decrease in the reflectivity of the particles and, in turn, a substantial deviation from "white" color. Thus, great effort was focused on eliminating these impurities. The broad particle size distribution also reduces the pigments' efficacy to scatter visible light. Particles of 0.2-0.3 µm diameter are most efficient for scattering visible light.

To alleviate these problems, a procedure was developed to produce a more uniform, purer titanium dioxide. This method described in Kirk-Othmer, Encyclopedia of Chemical Technology, 3rd edition, Vol. 23, pages 143-149, in U.S. Patent 2,833,627, in U.S. Patent 4,462,979, and in other patents mentioned in this latter patent

involves reaction of titanium tetrachloride with oxygen in a 1500°C flame to produce a particulate soot. The resulting titanium dioxide is not only substantially purer, but also is formed in uniform, appropriately sized particles, i.e., particles in the range 0.18 µm to 0.26 µm. Since appropriately sized particles are directly obtained, mechanical processing and its concomitant costs are eliminated.

Although this improved procedure for producing titanium dioxide yields substantially improved purity, binder degradation due to exposure to sunlight still occurs. To improve performance, the titanium dioxide is coated with a passivating, dielectric layer, e.g., silicon dioxide or aluminum oxide. (Generally a material with a resistance to electron or hole transport above 10⁴ ohms is desired.)
The coating, it is believed, prevents photogenerated electrons and holes in the titanium dioxide from directly or indirectly reacting with the binder. Although stability is enhanced through this coating procedure, the enhanced stability is purchased at the expense of 1) the increased cost associated with the coating process, and 2) decreased reflectivity associated with the coating material. Nevertheless, the stability of such material is quite acceptable and it is presently being extensively utilized in commercial products.

Process involving heat treatment of TiO₂ to enhance photostability are disclosed in FR-A-2440976, EP-A-0026948 and GB-A-1162786.

The Abstract Bulletin of the Institute of Paper Chemistry, 55 [6], December 1984, page 731, abstract number 6946(u), contains an abstract of JP-A-84 01 544 which discloses use of TiO₂ pigments prepared by impact crushing and subsequent fluid milling. The pigments may be surface coated.

### Summary of the Invention

According to the invention there is provided a process as set out in claim 1.

We have found that for titanium dioxide, e.g. when produced by a process that does not require deagglomeration of aggregated particles, such as the soot (chloride) process, a reduced photochemical activity is obtainable even if the titanium dioxide is not coated. This stability in the absence of coating is achieved by annihilating the photogenerated charges in the titanium dioxide before they chemically react with species adsorbed on the pigment particles. This result is achieved by 1) the introduction of electron and hole traps into the lattice or onto the surface of the titanium dioxide particles beyond those already present after the synthesis of the titanium dioxide, and/or, by 2) the suppression of reduced entitites such as Ti³⁺. Surprisingly, even though submicron particles undoubtedly have traps associated with their high surface to mass ratio, a further increase in trap concentrations produces an unexpectedly large increase in stability.

### Brief Description of the Drawing

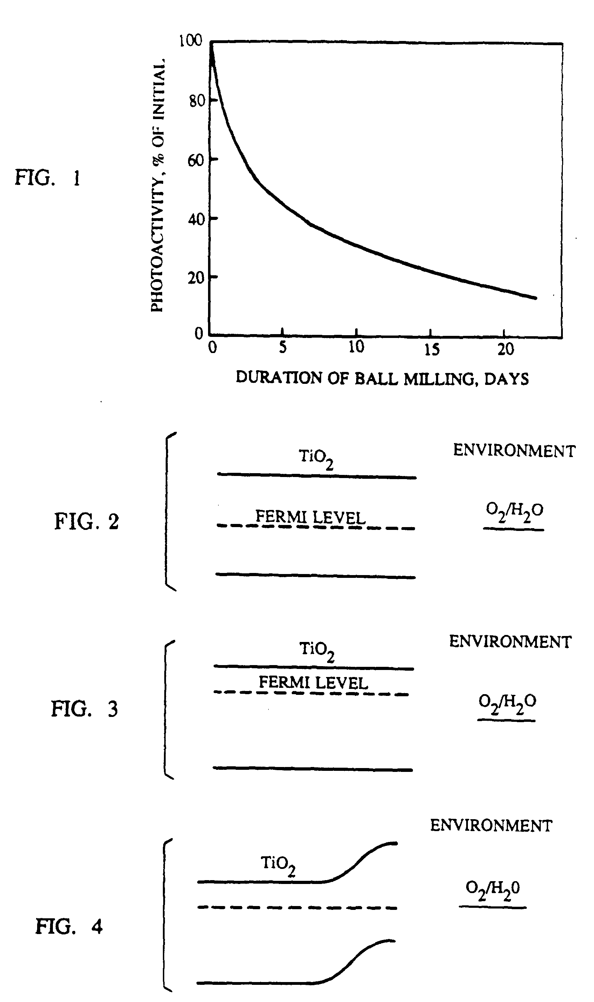

FIG. 1 illustrates results achieved with the invention and FIGS. 2-4 illustrate processes associated with the invention.

### Detailed Description

The invention involves titanium dioxide utilized as a pigment in a composition where the interaction of this pigment with a binder, e.g. with latex, acrylics, vinyl acetates, alkydes, polyesters, polystyrenes, PMMA, PVC, melamines, cellulose, and cellulose derivatives is possible. (A binder for purposes of this invention is an organic polymer, polymer containing material, or polymer precursor in which the pigment is dispersed or suspended). Thus, the invention pertains to a pigment composition containing both titanium dioxide, e.g. high purity titanium dioxide, and a binder. (For purposes of this invention, titanium dioxide includes its rutile and anatase forms.) In such composition, it is typically desirable to utilize titanium dioxide having a particle size in the range 0.1 to 1.0 µm. Particles larger than 1 µm and particles smaller than 0.1 µm are not desirable because they are less efficient light scatterers per unit weight. (Although particles outside this size range are not advantageous, they are not precluded.) As previously discussed, through the interaction of titanium tetrachloride and oxygen, particles of desirable size are easily produced.

To obtain increased stability, interaction of charges (holes and electrons) and reduced entities such as Ti³⁺ with adsorbed entities, e.g., 1) entities that react with holes such as water and most significantly adsorbed organic material, and 2) entities that react with electrons such as oxygen, should be suppressed. This suppression is attainable by reacting holes with electrons, to annihilate both, before they react with adsorbed entities at the particle surface, such as by avoiding reduced species, e.g., Ti³⁺, Ti²⁺, and oxygen lattice vacancies that strongly interact with surface adsorbed water and other reactants and that also, even more significantly, for reasons discussed below, prevent electron-hole annihilation. Electrons and holes are reacted in an advantageous manner by providing traps for each. Generally, it is desirable to produce electron and hole traps, i.e., recombination sites, at a surface concentration of at least 10¹²/cm², preferably 4 x 10¹² or a bulk concentration of 10¹⁷/cm³. The stability of the material increases substantially with the number of traps. However, at surface concentrations greater than 3 x 10¹⁴/cm² or bulk concentrations of 3 x 10¹⁹/cm³, it appears that further significant improvement is not obtained and color changes are observed. The desired concentration of traps is introduced by mechanical stress, i.e., by grinding and crushing where agglomerates are not merely dispersed, but where at least 10% of the individual, submicron sized pigment particles are fractured by the stress. For example, traps for both electrons and holes are produced at a sufficient concentration by ball milling titanium dioxide particles in a plastic jar for at least a day, preferably for 21 days.

In particular, it is possible to induce annihilation of holes and electrons by limiting the presence of reduced entities such as Ti³⁺, Ti²⁺ and oxygen lattice vacancies. A contemplated explanation for this phenomenon is based on the alignment of the Fermi level in the TiO₂ with the electrochemical potential of the environment. As illustrated in FIG. 2, the Fermi level in intrinsic TiO₂ (TiO₂ with no reduced species) is approximately at the same electrochemical potential as the typical environment of O₂/H₂O. Thus band bending at the TiO₂/environment interface does not occur. The presence of reduced entities in the TiO₂ produces a Fermi level as shown in FIG. 3. Thus, at the interface between the O₂/H₂O environment and the TiO₂ equalization of the Fermi level and the electrochemical potential of the environment, produces band bending as shown in FIG. 4. Since no band bending occurs with intrinsic TiO₂, electrons have no barrier to reaching the TiO₂/environment interface and no barrier to their annihilation of holes at the interface. In contrast, the TiO₂ with reduced species, as shown in FIG. 4, presents a substantial barrier to electrons and prevents their reaching the TiO₂/environment interface. This barrier for electrons, in contrast, promotes the migration of holes to the interface. Thus, holes are preferentially directed to the interface and annihilation of these holes, e.g., photogenerated holes that induce degradation, is undesirably limited.

Production of dopant sites is another possible means for attaining the desired trap concentration. However, the dopant should not induce band bending as shown in FIG. 4. For example, iron, manganese or cobalt doping used in TiO₂ in a reducing environment, e.g., an aqueous solution containing methylviologen cations and methylviologen radical cations shows good stability. However, the effect of dopants in an environment with a lower electrochemical potential, e.g., an oxidizing environment, is not clear.

The heating of titanium dioxide in an oxygen environment at a temperature of at least 350°C, preferably at least 550°C, also limits the reaction of charges with species such as water and adsorbed organic material. This heat treatment ensures that essentially all the Ti, including that on the surface, is fully oxidized to Ti⁴⁺, thus limiting adsorption of water and other adsorbates on the surface and even more importantly ensuring electron hole annihilation. Subsequent heating in a reducing environment, e.g., hydrogen, produced the opposite effect and thus limits electron hole annihilation. Similarly, if heating to 550°C occurs in an inert environment such as in nitrogen, and in the presence of an organic adsorbate, reduced species, such as Ti³⁺ are formed. The same effect is seen in an inert atmosphere, but in the absence of an organic adsorbate, at temperatures exceeding 800°C. It is also seen at such temperatures in an air or oxygen environment, but only if the subsequent cooling is sufficiently rapid to prevent curing of oxygen vacancies, e.g., the pigment is quenched in a cold fluid. Thus, if heating of the pigment occurs in an oxidizing atmosphere, at 350 to 800°C paint photostability is enhanced, while if it occurs in an inert environment in the presence of a reducing agent, or at extremely elevated temperatures, instability is promoted.

Although expedient means for annihilation of electron and holes has been disclosed, enhanced stability is not dependent on the method utilized to produce this effect. As long as a sufficient number of effective traps or annihilation means are introduced into the pigment, a corresponding enhancement of stability is obtained. For example, if Ti³⁺ and other reduced species are substantially eliminated, stability is enhanced because annihilation is promoted. The following examples are illustrative of 1) advantageous methods of eliminating destructive photogenerated charges, 2) the results achieved by this elimination, and 3) results achieved by reducing the adsorption of species that react with these charges, e.g., by assuring that all the Ti on the surface and in the bulk is fully oxidized to Ti⁴⁺ and is coordinated with oxygen.

### EXAMPLE 1

Titanium dioxide particles in their rutile form were obtained from E. I. duPont de Nemours & Co., Inc. as Dupont R-101 pigment. This pigment had an average particle size diameter of 0.2 µ*m*, had a narrow particle size distribution, and had a coating of triethanolamine which constituted 1% by weight of the particles. Experiments were performed both on the titanium dioxide as purchased and on titanium dioxide particles that were etched in a strong mineral acid. This mineral acid etch constituted immersion in 3M boiling sulfuric acid for 15 minutes. (Another batch of particles were etched in 3M boiling hydrochloric acid but the observed result did not depend on the acid utilized.) After cooling to room temperature, the mixture was filtered and washed five times with deionized water.

Treated particles and untreated particles in separate batches were ball-milled in a 500 ml polyethylene jar half filled with dense alumina cylinders measuring 6 mm in diameter and 6 mm in length. For each run the jar was filled with 100g of titanium dioxide and 350 ml of deionized water. The jar was rolled at 120 RPM and samples of the resulting slurry were removed for testing after one day, two days, one week, two weeks, and three weeks of milling.

The resulting milled pigment was assayed for photoactivity by suspending a 150 mg sample of titanium dioxide in an aqueous solution that was 2.5x10⁻³M in methylviologen (made of the dichloride) and 3x10⁻²M in disodium EDTA. The suspension was buffered at pH 6.0 and kept under nitrogen. Photogenerated holes oxidize EDTA directly. Electrons reduce methylviologen to blue methylviologen radical that is assayed spectroscopically, by following the change of absorption at 602 nm. The change in absorption is directly proportional to the rate of the photochemical reaction. The light source utilized for treatment of the composition was a 250W Xe/Hg arc lamp. The output of this lamp was filtered utilizing a Corning 7-51 and 0-51 filter to confine the active radiation to a wavelength of 360<λ<400 nm.

The size of the pigment particles obtained for various lengths of treatment were measured utilizing the Brunnauer, Emmett and Teller (BET) gas adsorption/desorption method. Through this measurement, a decrease in the average particle size from 0.2 µ*m* to 0.1 *µm* was observed after 21 days milling. The decrease in photoactivity as a function of milling time is shown in the Figure. As can be seen, the photoactivity decreased to 9% of its initial value. Heating the milled sample in air to 550°C for two hours further decreased the photoactivity to 6% of the initial value, while heating it under nitrogen at 550°C for two hours increased the photoactivity from 9% to 15% of the initial value, but only if there is an organic adsorbate such as triethanolamine or cyclohexanone on the particles.

## Claims

1. A process for enhancing the photostability of a pigment composition wherein the pigment composition comprises submicron-sized titanium dioxide particles and a binder, said binder comprising an organic polymer, a polymer-containing material, or a polymer precursor,
CHARACTERIZED BY grinding already submicron seized titanium dioxide individual pigment particles such that at least a portion of the individual submicron sized particles are fractured to a sufficient degree that the photostability of the pigment composition is thereby enhanced.

2. A process as set out in claim 1 wherein the titanium dioxide prior to said grinding, is formed by a process which does not require the deagglomeration of aggregated particles.

3. A process as claimed in claim 1 or claim 2 wherein said composition is a paint.

## Patentansprüche

1. Verfahren zur Verbesserung der Lichtbeständigkeit einer Pigmentzusammensetzung, die Titandioxid-Partikel in Submikron-Größe und einen Binder umfasst, wobei der Binder ein organisches Polymer, ein Polymer enthaltenes Material oder einen Polymer-Vorläufer enthält,
dadurch gekennzeichnet, dass bereits auf submikroskopische Teilchengröße gebrachte, individuelle Pigmentpartikel von Titandioxid gemahlen werden, so dass mindestens ein Teil der individuellen, submikroskopischen Teilchen in genügendem Maß zerkleinert werden, dass die Lichtstabilität der Pigmentzusammensetzung dabei verbessert wird.

2. Verfahren nach Anspruch 1, worin das Titanoxid vor dem Mahlen durch einen Prozess geformt wird, der keine Desagglomerisation von aggregierten Teilchen erforderlich macht.

3. Verfahren nach Anspruch 1 oder 2, worin die Zusammensetzung ein Anstrichmittel ist.

## Revendications

1. Procédé d'amélioration de la photostabilité d'une composition pigmentaire, dans lequel la composition pigmentaire comprend des particules de dioxyde de titane de taille sous-micronique et un liant, ledit liant comprenant un polymère organique, une matière contenant un polymère ou un précurseur de polymère,
caractérisé par le broyage de particules individuelles de pigments dioxyde de titane déjà de taille sous-micronique de telle sorte qu'au moins une portion des particules individuelles de taille sous-micronique soient brisées à un degré suffisant pour que la photostabilité de la composition pigmentaire soit ainsi améliorée.

2. Procédé selon la revendication 1, dans lequel avant ledit broyage, le dioxyde de titane est formé par un procédé ne nécessitant pas la désagglomération de particules agrégées.

3. Procédé selon la revendication 1 ou la revendication 2, dans lequel ladite composition est une peinture.
